# EUROPÄISCHE PATENTANMELDUNG

(11) **EP 2 423 085 A2**
(43) Veröffentlichungstag der Anmeldung: **29.02.2012**
(21) Anmeldenummer: 11004775.0
(22) Anmeldetag: 10.06.2011
(51) Int. Cl.: B62J 9/00, B62J 11/00, E05B 69/00

(54) **Vorrichtung zur diebstahlsicheren temporären Aufnahme von Bekleidungsstücken**

(30) Priorität: 27.08.2010 DE 102010035708
(71) Anmelder: Semmler, Artur, 35305 Grünberg (DE)
(72) Erfinder: Semmler, Artur, 35305 Grünberg (DE)
(74) Vertreter: Walther, Walther & Hinz GbR

(57) **Zusammenfassung**

Gegenstand der Erfindung ist eine Vorrichtung zur diebstahlsicheren, temporären Aufnahme von Bekleidungsstücken, zum Beispiel einer Jacke, Hose oder Helm, wobei die Vorrichtung an einem Zweirad, insbesondere an einem Motorrad befestigt ist, wobei die Vorrichtung ein Gehäuse (1, 11) umfasst, dass diebstahlsicher am Motorrad befestigbar ist, wobei die Vorrichtung eine Aufnahmeeinrichtung (10) für die Bekleidungsstücke aufweist, die durch das Gehäuse (1, 11) aufnehmbar ist, wobei die Aufnahmeeinrichtung (10) partiell aus dem Gehäuse herausnehmbar ist, wobei die Aufnahmeeinrichtung aber dennoch diebstahlsicher mit dem Gehäuse (1, 11) verbunden bleibt.

## Beschreibung

Die Erfindung betrifft eine Vorrichtung zur diebstahlsicheren, temporären Aufnahme von Bekleidungsstücken, zum Beispiel einer Jacke, einer Hose oder eines Helmes, wobei die Vorrichtung an einem Zweirad, insbesondere an einem Motorrad befestigt ist.

Ein Motorradanzug besteht insbesondere aus einer Hose und einer Jacke, wobei sowohl die Hose als auch die Jacke aus einem Material hergestellt sind, das sowohl die Verletzungsgefahr bei Stürzen vermindern aber auch im Wesentlichen wasser- und luftdicht sein soll.

Insofern sind die Materialien, aus denen solche Jacken und Hosen gefertigt überaus dicht, und besitzen darüber hinaus an den unterschiedlichsten Stellen auch Polsterungen, um bei einem Sturz dämpfend zu wirken. Zur Ausrüstung eines Motorradfahrers gehören ebenfalls ein Helm sowie die entsprechenden Motorradstiefel.

Wie bereits ausgeführt, sind die Bekleidungsstücke, insbesondere Hose und Jacke relativ dick und auch dicht, und somit wenig atmungsaktiv. Insbesondere bei warmem Wetter ist eine solche Ausrüstung wenig geeignet, um vom Motorradfahrer getragen zu werden, wenn er nicht mit dem Motorrad fährt, da man unmittelbar unter diesen Bekleidungsstücken zu schwitzen beginnt. Die Bekleidungsstücke sind darüber hinaus äußerst voluminös, sodass sie in den üblichen Gepäcktaschen nicht untergebracht werden können. Will der Motorradfahrer nicht die Gefahr des Diebstahls hinnehmen, wenn er solche Bekleidungsstücke auf dem Motorrad zurücklässt, dann bleibt nur die Möglichkeit die Bekleidungsstücke anzulassen. Dies ist aus den vorbeschriebenen Gründen äußerst unbefriedigend, wobei die der Erfindung zugrunde liegende Aufgabe darin besteht, hier Abhilfe zu schaffen.

Die erfindungsgemäße Vorrichtung zur diebstahlsicheren, temporären Aufnahme von Bekleidungsstücken zeichnet sich dadurch aus, dass die Vorrichtung ein Gehäuse umfasst, das diebstahlsicher am Motorrad befestigbar ist, wobei die Vorrichtung eine Aufnahmeeinrichtung für die Bekleidungsstücke aufweist, die durch das Gehäuse aufnehmbar ist, wobei die Aufnahmeeinrichtung partiell aus dem Gehäuse herausnehmbar ist, wobei die Aufnahmeeinrichtung aber dennoch diebstahlsicher mit dem Gehäuse verbunden bleibt. Hieraus wird Folgendes deutlich: Das Gehäuse ist diebstahlsicher am Motorrad befestigt, beispielsweise im Bereich des Lenkers, an dem Tank oder dem Gepäckträger. Eine diebstahlsichere Befestigung des Gehäuses kann im Einzelnen dadurch vorgenommen werden, dass die Befestigungsmittel zur Fixierung des Gehäuses am Motorrad nur bei geöffnetem Gehäuse zugänglich sind. Das heißt, dass bei geschlossenem Gehäuse das Gehäuse selbst nicht vom Motorrad abnehmbar ist. Die Aufnahmeeinrichtung selbst, die insbesondere sackähnlich ausgebildet ist und eine Öffnung aufweist, die diebstahlsicher verschließbar ist, dient der eigentlichen Aufnahme der Bekleidungsgegenstände. Die Aufnahmeeinrichtung ist aus wasserdichtem oder zumindest aus wasserabweisendem Material, beispielsweise einem mit Kunststoff beschichteten Gewebe herstellbar, das zudem insbesondere reiß- und schneidfest ausgebildet ist, um zu verhindern, dass mithilfe eines Messers oder eines ähnlichen Schneidgegenstandes die Aufnahmeeinrichtung zerstört wird. In diesem Zusammenhang ist insbesondere vorgesehen, dass die Aufnahmeeinrichtung aus einem Gewebe hergestellt ist, das schnittfeste Gewebefäden, insbesondere schnittfeste Schussfäden zum Beispiel aus einem Metalldraht aufweist, wobei das Gewebe mit Kunststoff beschichtet ist.

Bei Nichtgebrauch der Aufnahmeeinrichtung befindet sich die nach Art eines Gewebesacks ausgebildete Aufnahmeeinrichtung zusammengerollt oder zusammengelegt in dem Gehäuse. Soll die Aufnahmeeinrichtung ihrem eigentlichen Zweck zugeführt werden, so wird die Aufnahmeeinrichtung aus dem Gehäuse herausgenommen, wobei bei einem Gehäuse, dass als Box ausgebildet ist, hierzu eine an der Box angeordnete und verschließbare Klappe geöffnet werden muss. Nach Herausnahme der Aufnahmeeinrichtung wird die Klappe wieder verschlossen wird, wobei aber dennoch ein Schlitz vorgesehen ist, durch den die Aufnahmeeinrichtung aus der Box herausragt. Der Schlitz kann durch einen Reißversschluss verschließbar sein.

Denkbar ist in diesem Zusammenhang ebenfalls das Gehäuse als Tasche auszubilden, wobei die Tasche eine verschließbare Öffnung aufweist, um die Aufnahmeeinrichtung in der Tasche zu verstauen oder auch aus der Öffnung herausragen zu können, wobei dann, wenn die Aufnahmeeinrichtung aus der Tasche herausragt, diese, wie bereits an anderer Stelle erläutert, ebenfalls noch im Inneren mit der Tasche bzw. dem Zweirad verbunden ist, sodass dann, wenn die Öffnung diebstahlsicher verschlossen ist, beispielsweise in dem ein Reißverschluss mit einem Schloss gesichert ist, die Aufnahmeeinrichtung selbst durch die Tasche gesichert ist. Ganz ähnlich, wie dies bei der Box bereits beschrieben worden ist, besitzt auch das als Tasche ausgebildete Gehäuse einen Schlitz, der durch einen Reißverschluss verschließbar ist, wenn die Aufnahmeeinrichtung sich innerhalb der Tasche bzw. der Box befindet, wobei der Reißverschluss nur geöffnet ist, wenn die Aufnahmeeinrichtung aus der Box oder der Tasche herausragt.

Alternativ kann vorgesehen sein, dass die Befestigungsmittel zur Befestigung des Gehäuses am Motorrad in der Aufnahmeeinrichtung angeordnet sind. Es wurde bereits darauf hingewiesen, dass die Aufnahmeeinrichtung, die beispielsweise als Sack oder sackähnlich ausgebildet ist, ein Material aufweist, das schneid- und reißfest ist. Befinden sich somit die Befestigungsmittel für das Gehäuse am Motorrad, beispielsweise ein U-förmiger Bügel, der zwei Gewindeschenkel aufweist, auf denen Muttern aufdrehbar sind, innerhalb der Aufnahmeeinrichtung, dann sind diese selbst bei geöffneter Box oder Tasche von außen nicht zugänglich. Dies dann, wenn die Aufnahmeeinrichtung selbst diebstahlsicher zu verschließen ist, was durch Verschließen z. B. des Reißverschlusses der Aufnahmeeinrichtung bewerkstelligt werden kann.

Diese Ausführungsform hat den Vorteil, dass spezielle Maßnahmen zum Verschließen der Box bei herausragender Aufnahmeeinrichtung aus der Box oder der Tasche nicht getroffen werden müssen.

Anhand der Zeichnungen wird die Erfindung nachstehend beispielhaft näher erläutert.
- Figur 1: zeigt ein im Wesentlichen rundes Gehäuse als Box, das an dem Motorrad beispielsweise an der Gabel des Motorrads befestigt ist, wobei in dem Gehäuse die sackähnliche Aufnahmeeinrichtung befestigt ist;
- Figur 2: zeigt eine Vorderansicht auf das Gehäuse gemäß Figur 1;
- Figur 3: zeigt eine Tasche zur Aufnahme der sackähnlichen Aufnahmeeinrichtung;
- Figur 4: zeigt eine Vorderansicht auf die Tasche gemäß Figur 3;
- Figur 5: zeigt in einer alternativen Ausführungsform die Anordnung der Befestigungsmittel für das Gehäuse am Zweirad in der Aufnahmeeinrichtung in einer Seitenansicht im Schnitt;

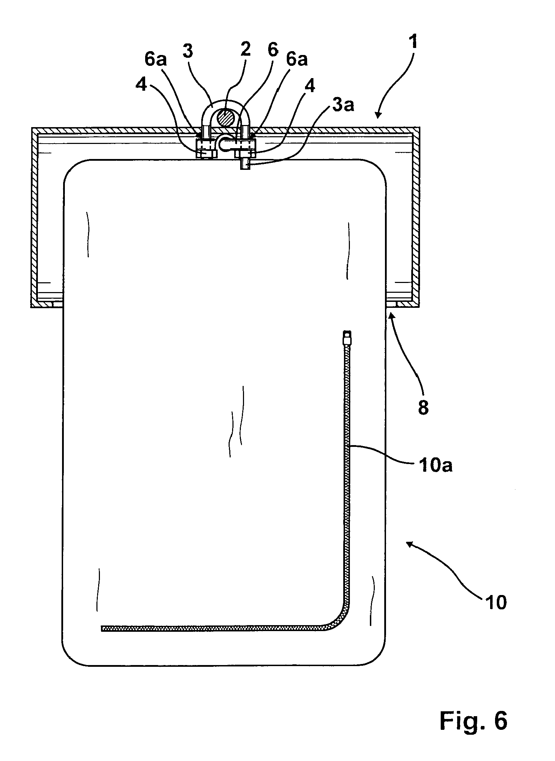

- Figur 6: zeigt schematisch eine Draufsicht von oben auf die Tasche bei aus der Tasche herausgeführter, sackähnlicher Aufnahmeeinrichtung.

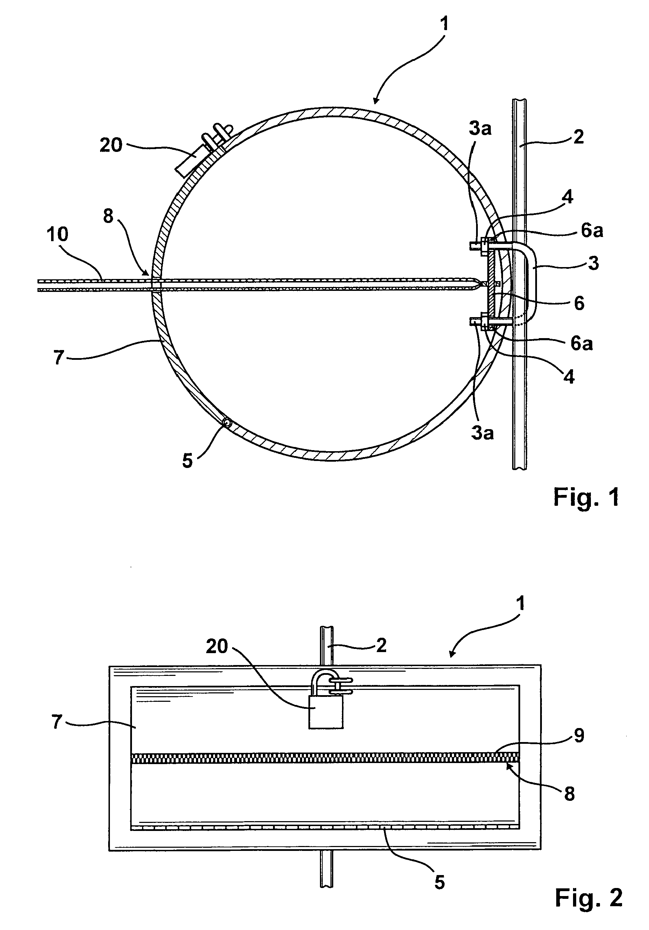

Bei der Darstellung gemäß den Figuren 1 und 2 ist ein als runde Box 1 ausgebildetes Gehäuse vorgesehen, wobei die Box 1 mit der schematisch angedeuteten Gabel 2 des Motorrades durch einen in die Box ragenden Bügel 3 verbunden ist. Hierzu weist der Bügel, der U-förmig ausgebildet ist, zwei jeweils mit einem Gewinde versehene Schenkel 3a auf, auf die die entsprechenden Muttern 4 aufschraubbar sind.

An dem Bügel 3 befindet sich darüber hinaus eine Traverse 6, die der Verbindung mit der sackähnlichen Aufnahmeeinrichtung 10 dient. Die Traverse besitzt endseitig jeweils eine Öse 6a zur Aufnahme durch die Schenkel 3a. Die Box 1 weist darüber hinaus eine an der Box 1 durch ein Scharnier angebrachte schwenkbare Klappe 7 auf, die mit der Box verschließbar ist. Die Klappe 7 zeigt einen Schlitz 8, durch den die sackähnliche Aufnahmeeinrichtung 10 nach außen geführt wird. Der Schlitz 8 ist durch einen Reißverschluss 9 verschließbar. Ein Abschließen ist aber grundsätzlich nicht erforderlich, da die Schlitzbreite so gering ist, dass man hierdurch nicht hindurchfassen kann, wobei der Reißverschluss jedoch durch ein Schloss abschließbar sein kann. Bei geöffnetem Reißverschluss 9 ist die sackähnliche Aufnahmeeinrichtung 10 aus dem Inneren der Box herausführbar. Wird die Aufnahmeeinrichtung nicht benötigt, so wird die Klappe, die durch das Scharnier 5 mit der Box 1 in Verbindung steht, geöffnet, um dann die sackähnliche Aufnahmeeinrichtung 10 aufgerollt in der Box 1 zu verstauen.

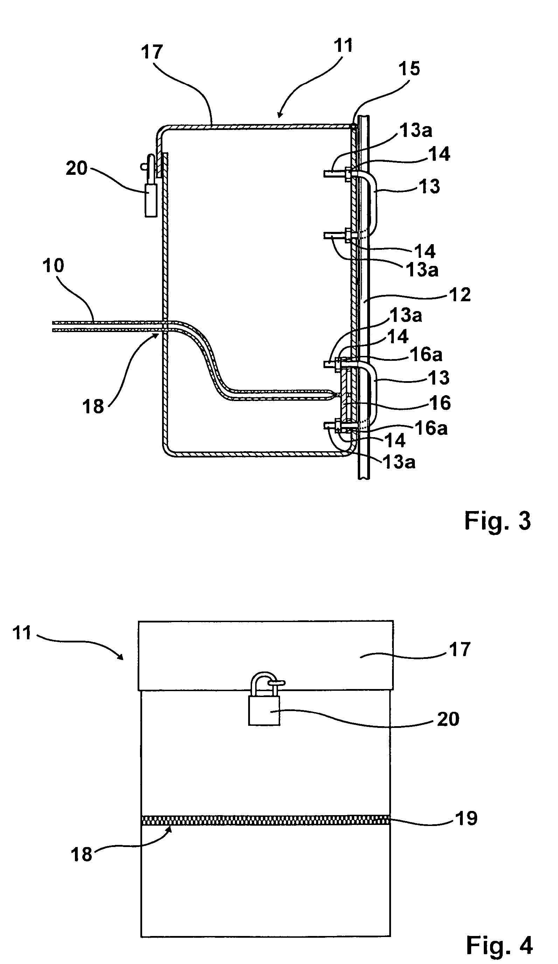

Bei der Darstellung gemäß den Figuren 3 und 4 ist eine Tasche, beispielsweise eine Satteltasche 11 dargestellt, wobei die Satteltasche 11 einen Deckel 17 aufweist, der durch das Scharnier 15 an der Satteltasche 11 verschwenkbar angelenkt ist. Die Satteltasche 11 besitzt darüber hinaus einen Schlitz 18, der durch einen Reißverschluss 19 verschließbar ist. Verschließbar ist ebenfalls der Deckel 17 durch das angedeutete Schloss 20. Gehalten ist die Satteltasche 11 durch zwei Bügel 13 beispielsweise an einer Strebe 12 des Gepäckträgers, wobei die Bügel 13 Gewindeschenkel 13a aufweisen, die die Möglichkeit eröffnen, die Tasche diebstahlsicher z. B. am Gepäckträger zu befestigen. Der eine Bügel 13 zeigt darüber hinaus eine Traverse 16 mit endseitigen Ösen 16a, an der die sackähnliche Aufnahmeeinrichtung 10 fixiert ist. Auch hier befindet sich die sackähnliche Aufnahmeeinrichtung 10 im aufgerollten Zustand im Inneren der Tasche 11, wobei im benutzten Zustand die sackähnliche Aufnahmeeinrichtung 10 aus dem Schlitz 18 herausragt, der durch den Reißverschluss 19 verschließbar ist und der darüber hinaus auch abschließbar ist.

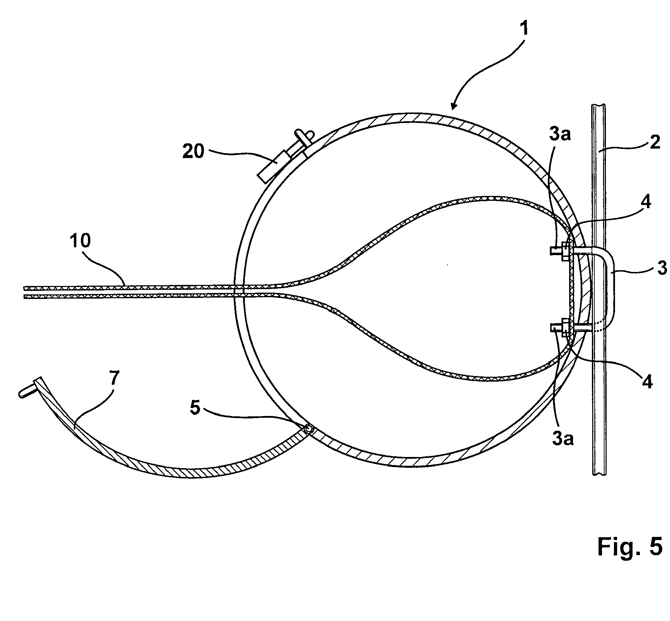

Aus der Darstellung gemäß Fig. 5 ergibt sich eine alternative Ausführungsform. Hierbei sind gleiche Teile mit den gleichen Bezugszeichen versehen wie in den Darstellungen gemäß Fig. 1 bis Fig. 4. Im Einzelnen ist hierbei erkennbar, dass die sackähnliche Aufnahmeeinrichtung 10 den Bügel 3 im Bereich der Gewindeschenkel 3a derart erfasst, dass die Muttern 4, die zur Fixierung der Box 1 beispielsweise an der Gabel des Motorrades dienen, sich im Inneren der sackähnlichen Aufnahmeeinrichtung befinden. Wenn somit die sackähnliche Aufnahmeeinrichtung 10 über einen verschließbaren Reißverschluss verfügt, sind die Muttern 4 von außen nicht zugänglich. An dieser Stelle wird daran erinnert, dass das Material der sackähnlichen Aufnahmeeinrichtung 10 besonders schneid- und reißfest ausgebildet ist. Die Einrichtung 10 kann somit aus der Öffnung der Box herausragen, ohne dass besondere Maßnahmen getroffen werden müssen, um die Aufnahmeeinrichtung z. B. in der Box zu sichern.

Aus der Darstellung gemäß 6 ergibt sich schematisch die Ausbildung der sackähnlichen Aufnahmeeinrichtung 10, die über einen winkelförmig umlaufenden Reißverschluss 10a verfügt und die aus dem Schlitz 8 oder der Öffnung der Box herausragt. Der Reißverschluss ist ebenfalls durch ein Schloss verschließbar (nicht dargestellt). Die sackähnliche Aufnahmeeinrichtung 10 besteht üblicherweise aus einem beschichteten Gewebe und ist ganz ähnlich einem Kleidersack ausgebildet, wobei das Gewebe als kunststoffbeschichtetes Gewebe ausgebildet ist, das zudem reiß- und schnittfest sein kann.

## Patentansprüche

1. Vorrichtung zur diebstahlsicheren, temporären Aufnahme von Bekleidungsstücken, zum Beispiel einer Jacke, Hose oder Helm, wobei die Vorrichtung an einem Zweirad, insbesondere an einem Motorrad befestigt ist, wobei die Vorrichtung ein Gehäuse (1, 11) umfasst, dass diebstahlsicher am Motorrad befestigbar ist, wobei die Vorrichtung eine Aufnahmeeinrichtung (10) für die Bekleidungsstücke aufweist, die durch das Gehäuse (1, 11) aufnehmbar ist, wobei die Aufnahmeeinrichtung (10) partiell aus dem Gehäuse herausnehmbar ist, wobei die Aufnahmeeinrichtung aber dennoch diebstahlsicher mit dem Gehäuse (1, 11) verbunden ist.

2. Vorrichtung zur diebstahlsicheren, temporären Aufnahme von Bekleidungsstücken nach Anspruch 1,
**dadurch gekennzeichnet,**
**dass** die Aufnahmeeinrichtung (10) sackähnlich ausgebildet und eine Öffnung aufweist, die diebstahlsicher verschließbar ist.

3. Vorrichtung nach einem der voranstehenden Ansprüche,
**dadurch gekennzeichnet,**
**dass** die Aufnahmeeinrichtung (10) aus wasserdichtem oder zumindest wasserabweisendem Material ausgebildet ist.

4. Vorrichtung nach einem der voranstehenden Ansprüche,
**dadurch gekennzeichnet,**
**dass** das Material der Aufnahmeeinrichtung (10) reiß- und schneidfest ausgebildet ist.

5. Vorrichtung nach einem der voranstehenden Ansprüche,
**dadurch gekennzeichnet,**
**dass** die Aufnahmeeinrichtung (10) aus einem Gewebe hergestellt ist, insbesondere aus schnittfesten Gewebefäden und insbesondere schnittfeste Schussfäden zum Beispiel aus Metalldraht aufweist, wobei das Gewebe mit einem Kunststoff beschichtet ist.

6. Vorrichtung nach einem der voranstehenden Ansprüche,
**dadurch gekennzeichnet,**
**dass** das Gehäuse als Box (1) ausgebildet ist, wobei die Box (1) eine verschließbare Klappe (7) aufweist.

7. Vorrichtung nach einem der voranstehenden Ansprüche,
**dadurch gekennzeichnet,**
**dass** das Gehäuse als Tasche (11)ausgebildet ist, wobei die Tasche (11) eine verschließbare Öffnung aufweist.

8. Vorrichtung nach einem der voranstehenden Ansprüche,
**dadurch gekennzeichnet,**
**dass** das Gehäuse (1, 11) einen Schlitz (8, 18) für die Aufnahmeeinrichtung (10) aufweist.

9. Vorrichtung nach einem der voranstehenden Ansprüche,
**dadurch gekennzeichnet,**
**dass** die Aufnahmeeinrichtung (10) im Innenraum des Gehäuses (1, 11) mit dem Gehäuse (1, 11) verbunden ist.

10. Vorrichtung nach einem der voranstehenden Ansprüche,
**dadurch gekennzeichnet,**
**dass** zur Befestigung des Gehäuses (1, 11) am Motorrad Befestigungsmittel vorgesehen sind, wobei die Befestigungsmittel (3, 3a, 4) in der Aufnahmeeinrichtung (10) angeordnet sind.

11. Vorrichtung nach Anspruch 10,
**dadurch gekennzeichnet,**
**dass** die Befestigungsmittel mindestens einen Bügel (3) umfassen, wobei der Bügel Gewindeschenkel (3a) aufweist, wobei mittels Muttern (4) auf den Gewindeschenkeln (3a) sich innerhalb der Aufnahmeeinrichtung (10) befinden.
